# FASCICULE DE BREVET EUROPEEN

(11) **EP 2 724 564 B1**
(45) Date de publication et mention de la délivrance du brevet: **06.09.2017**
(21) Numéro de dépôt: 12738526.8
(22) Date de dépôt: 25.06.2012
(51) Int. Cl.: H04W 36/12, H04W 76/02, H04W 76/04

(54) **MÉCANISME DE GESTION DE CONNEXIONS PDN DANS LES RÉSEAUX LTE/EPC**
MECHANISMUS ZUR VERWALTUNG VON PDN-VERBINDUNGEN IN LTE/EPC-NETZWERKEN
MECHANISM FOR MANAGING PDN CONNECTIONS IN LTE/EPC NETWORKS

(30) Priorité: 24.06.2011 FR 1155592
(43) Date de publication de la demande: 30.04.2014
(73) Titulaire: Orange, 75015 Paris (FR)
(72) Inventeur: BERTIN, Philippe, F-35690 Acigne (FR); DAOUD TRIKI, Khadija, F-92193 Meudon (FR); GRALL, Xavier, F-35140 Mezieres Sur Couesnon (FR); PICHON, Dominique, F-92130 Issy Les Moulineaux (FR)
(86) Numéro de dépôt international: PCT/FR2012/051448
(87) Numéro de publication internationale: WO 2012/175896

(56) Documents cités:
- WO-A1-2011/025422
- US-A1- 2008 259 873
- TARIK TALEB ET AL: "DNS-Based Solution for Operator Control of Selected IP Traffic Offload", ICC 2011 - 2011 IEEE INTERNATIONAL CONFERENCE ON COMMUNICATIONS - 5-9 JUNE 2011 - KYOTO, JAPAN, IEEE, PISCATAWAY, NJ, USA, 5 juin 2011 (2011-06-05), pages 1-5, XP031908889, DOI: 10.1109/ICC.2011.5963137 ISBN: 978-1-61284-232-5
- INTEL CORPORATION: "P-GW relocation for SIPTO session continuity", 3GPP DRAFT; S2-112518_LIMONET_PGW_RELOCATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Xi'An; 20110516, 11 mai 2011 (2011-05-11), XP050525507,
- "3rd Generation Partnership Project; Technical Specification Group Services and System Aspects; General Packet Radio Service (GPRS) enhancements for Evolved Universal Terrestrial Radio Access Network (E-UTRAN) access (Release 10)", 3GPP STANDARD; 3GPP TS 23.401, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V10.2.1, 4 janvier 2011 (2011-01-04), pages 1-276, XP050462517, cité dans la demande

## Description

### 1. Domaine de l'invention

Le domaine de l'invention est celui des communications électroniques, et plus précisément celui de la gestion de la continuité des services supportés par des réseaux de commutation par paquets et accessibles depuis des terminaux mobiles à travers des réseaux d'accès de télécommunications par ondes radio-électriques.

### 2. Etat de la technique antérieure

Dans les réseaux LTE/EPC ("long term evolution / evolved packet core", en anglais) standardisés par 3GPP ("3rd Generation Partnership Project", en anglais), une session de communication par paquets est portée par une connexion dite PDN ("Packet Data Network" en anglais) établie entre un terminal mobile et une passerelle d'ancrage, aussi appelée "PDN-Gateway", ou P-GW en abrégé.

Dans la suite, on désigne une connexion PDN simplement par connexion.

La passerelle d'ancrage est située à la frontière entre un réseau d'accès, de collecte et de transport d'un opérateur de télécommunications par ondes radio-électriques, aussi appelé réseau mobile, auquel le terminal mobile est rattaché, et un réseau de commutation de paquets, désigné dans la norme 3GPP sous le nom de PDN, avec lequel la session de communication est établie. Ce PDN peut être l'Internet global, ou être limité à un opérateur et/ou à un type d'application précis. Le point d'accès au PDN est désigné sous le nom d'APN ("Access Point Name" en anglais). Un équipement de gestion centralisée dit MME ("Mobility Management Entity" en anglais) effectue la sélection de la passerelle d'ancrage en fonction de critères comprenant l'APN utilisé par le terminal mobile, et communique au terminal mobile une information relative à une porteuse par défaut ("default bearer", en anglais) qui lui permet d'établir la connexion en utilisant la passerelle d'ancrage sélectionnée.

La norme 3GPP TS 23.401 v10.2.1 prévoit (section 4.3.15) un mécanisme afin de sélectionner une passerelle d'ancrage au réseau LTE/EPC qui soit la plus proche de la station de base à laquelle s'est attaché un terminal mobile. Lorsque cette passerelle devient non optimale suite à un changement de conditions, comme par exemple une mobilité causant un changement de station de base pour ce terminal, la même norme prévoit (section 5.10.3) un autre mécanisme consistant à déconnecter puis reconnecter le terminal, ayant pour effet d'attribuer une autre passerelle plus adaptée.

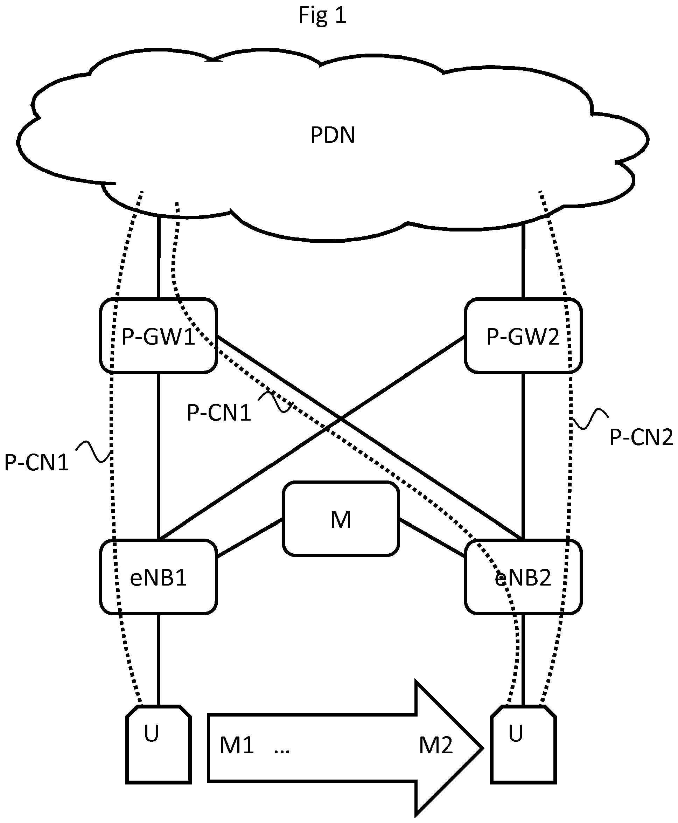

La procédure comprenant ces deux mécanismes selon la technique antérieure est présentée en référence aux éléments de la **figure 1****.**

A un moment M1 précédant une mobilité, afin d'ouvrir des sessions de communication vers un point d'accès APN du réseau de commutation de paquets PDN, un terminal mobile U a établi une connexion P-CN1 avec une passerelle d'ancrage P-GW1, préalablement sélectionnée par un équipement de gestion M pour le couple { U ; APN}.

Plus exactement, l'équipement de gestion M attribue au terminal mobile U une porteuse par défaut vers la passerelle d'ancrage, et c'est l'identifiant de cette porteuse par défaut qui sert à identifier de façon unique la connexion établie par la suite.

A un moment M2 consécutif à une mobilité, le terminal U a changé de station de base de rattachement mais a gardé la même connexion P-CN1, grâce à une procédure de transfert mobile classique ("mobile handover" en anglais). La connexion P-CN1 ne passe plus par la station de base eNB1 mais par eNB2. Dans un réseau LTE/EPC, une station de base permet à un terminal mobile de se connecter à toutes les passerelles d'ancrage par le biais d'une passerelle de service ("serving gateway", en anglais, non représentée dans la figure).

L'équipement de gestion M détecte que pour la nouvelle localisation du terminal U, c'est-à-dire pour la station de base eNB2, la passerelle d'ancrage P-GW1 est moins adaptée que P-GW2, et attribue donc P-GW2 comme nouvelle passerelle d'ancrage au couple { U ; APN }. L'équipement de gestion M instruit alors le terminal U de libérer la connexion P-CN1, puis de demander l'établissement d'une nouvelle connexion P-CN2, qui sera automatiquement faite avec P-GW2.

Dans une variante non illustrée, l'équipement de gestion M peut aussi décider d'attribuer P-GW2 comme nouvelle passerelle au couple { U ; APN } sans qu'il n'y ait mobilité du terminal U, par exemple si un changement de conditions du réseau provoque une surcharge de trafic sur P-GW1. L'équipement de gestion M instruit alors le terminal U de libérer de la connexion P-CN1, puis de demander l'établissement d'une nouvelle connexion P-CN2, qui sera automatiquement faite avec P-GW2.

On voit que selon la technique antérieure les deux connexions P-CN1 et P-CN2 ne peuvent pas coexister.

On comprend aussi que la procédure selon la technique antérieure impose une déconnexion immédiatement suivie d'une reconnexion. La déconnexion interrompt les sessions de communication en cours, et comme la reconnexion implique l'attribution par la passerelle au terminal mobile d'une nouvelle adresse (sous la forme d'une adresse IP, "Internet protocol", en anglais, et/ou d'un nouveau préfixe de celle-ci), les sessions doivent être réinitialisées. Il y a donc rupture de la continuité de service.

La demande de brevet WO 2011.025422 enseigne l'établissement à l'avance d'une nouvelle porteuse destinée à remplacer une ancienne porteuse, suite à un changement de conditions, comme par exemple la mobilité d'un terminal ayant établi une connexion portée par l'ancienne porteuse. Identifier à l'avance la nouvelle porteuse présente l'avantage d'accélérer l'activation d'une nouvelle connexion entre le terminal et une nouvelle passerelle d'ancrage, mais n'empêche pas une interruption des sessions en cours portées par l'ancienne connexion, et donc n'empêche pas une rupture de la continuité de service.

Il existe un besoin pour une solution, qui permette d'éviter complètement cette rupture de continuité des sessions de communication.

### 3. Exposé de l'invention

Selon la présente invention, des procédés comme les définissent les revendications 1 et 7, des dispositifs comme les définissent les revendications 9 et 10 et des programmes d'ordinateur comme les définissent les revendications 14 et 15, ont été fournis. Plus de détaille est définie dans les revendications dépendantes. L'invention vient améliorer la situation à l'aide d'un procédé de gestion d'au moins une connexion, une connexion étant établie entre un terminal mobile et une passerelle d'ancrage située entre un réseau mobile et un réseau de commutation de paquets, et étant apte à porter au moins une session de communication vers le réseau de commutation de paquets, caractérisé en ce qu'il comprend les étapes suivantes:
- réception d'un message de gestion en provenance d'un équipement apte à gérer ladite au moins une connexion, ledit message comprenant au moins une information relative à un changement d'état d'une connexion du terminal mobile, et un identifiant relatif à la connexion,
- détermination d'un besoin d'une nouvelle connexion, par analyse de ladite au moins une connexion en cours au moins à partir de l'information reçue,
- lorsqu'il est déterminé que le besoin d'une nouvelle connexion existe, déclenchement de l'émission d'une requête d'établissement d'une nouvelle connexion entre le terminal mobile et une nouvelle passerelle d'ancrage, en fonction de l'analyse.

Dans le procédé de gestion d'au moins une connexion selon l'invention, l'étape de réception d'un message de gestion informe le terminal mobile qu'une connexion utilisant une passerelle d'ancrage a changé d'état et donc qu'elle est devenue, ou qu'elle n'est plus, la mieux adaptée aux conditions du réseau. Ceci permet de laisser le terminal mobile initier lui-même les éventuelles actions nécessaires résultant de ce changement d'état, plutôt que de forcer de façon centralisée ces actions sur le terminal.

Selon l'invention, l'étape d'analyse des connexions en cours tient compte, par exemple à l'aide d'une table mise à jour suite à la réception du message de gestion, d'informations sur chaque connexion en cours sur le terminal mobile, telles que son état, le nombre et le type des sessions éventuellement portées par la connexion. Elle tient compte également d'autres informations dont le terminal dispose, par exemple d'instructions éventuelles données par son utilisateur. L'analyse de toutes ces informations détermine le besoin d'une nouvelle connexion pour le terminal mobile.

Selon l'invention, l'émission d'une requête d'établissement d'une nouvelle connexion est déclenchée suite à l'analyse des connexions en cours, sans être associée à un ordre de déconnexion suivi d'un ordre de reconnexion, contrairement à la technique antérieure. Ainsi le terminal peut-il garder active la connexion concernée par le message de gestion, s'il le souhaite, le temps que les sessions de communication portées par la connexion se terminent, et éviter de perturber ou perdre les flux de données associés aux sessions de communication.

On comprend que grâce à l'invention, c'est le terminal qui décide l'établissement d'une nouvelle connexion, et non un équipement de gestion du réseau.

Selon un aspect de l'invention, le procédé de gestion d'au moins une connexion est caractérisé en ce que l'état de la connexion prend une valeur d'un groupe comprenant au moins les valeurs suivantes:
- "obsolète",
- "préféré".

Le fait d'attribuer à chacune des connexions utilisées par un terminal mobile l'une de deux valeurs possibles d'état, en l'occurrence "obsolète" ou "préféré", permet au terminal de privilégier les connexions préférées au dépend des connexions obsolètes. Aussi, si aucune connexion préférée n'existe, le terminal mobile peut décider d'en établir une, et peut décider de libérer les connexions obsolètes.

Dans un mode de réalisation préféré de l'invention, seules deux valeurs d'état de connexion sont utilisées, "obsolète" et "préféré", et lorsque plusieurs connexions simultanées pour un couple { terminal ; APN } donné existent sur un terminal mobile, au plus une seule connexion peut être dans l'état "préféré".

Dans une variante avantageuse, plus de deux valeurs possibles d'état peuvent être utilisées pour représenter plusieurs degrés de préférence dans une échelle de valeurs entre "obsolète" et "préféré".

Dans une autre variante avantageuse, plus d'une connexion peut se trouver dans l'état "préféré".

Selon un autre aspect de l'invention le procédé de gestion d'au moins une connexion est caractérisé en ce que l'étape d'émission d'une requête d'établissement d'une nouvelle connexion est déclenchée lorsqu'aucune connexion n'est dans l'état "préféré".

L'avantage de cet aspect de l'invention est d'autoriser l'établissement d'une nouvelle connexion s'il n'en existe pas déjà qui soit dans l'état "préféré". Ceci permet l'utilisation d'une passerelle d'ancrage optimale pour du trafic nouveau.

Selon un autre aspect de l'invention le procédé de gestion d'au moins une connexion est caractérisé en ce que l'étape d'émission d'une requête d'établissement d'une nouvelle connexion est déclenchée par l'obtention d'une indication selon laquelle une nouvelle session de communication est nécessaire.

L'avantage de cet aspect de l'invention est de n'établir une nouvelle connexion avec la deuxième passerelle d'ancrage que si elle est nécessaire pour porter une nouvelle session de communication. Ceci évite la mobilisation inutile d'une connexion tant que le besoin de lui faire porter au moins une session de communication n'est pas identifié. L'indication selon laquelle le besoin apparait peut venir de l'utilisateur lui-même, par le biais d'une application qu'il a lancée sur le terminal mobile.

Selon un autre aspect de l'invention le procédé de gestion d'au moins une connexion est caractérisé en ce que le procédé comprend une étape de libération de la connexion, déclenchée en fonction de l'analyse et lorsque la connexion ne porte plus aucune session de communication.

Seule une connexion dans l'état "obsolète" peut faire l'objet d'une libération selon cet aspect de l'invention, et c'est l'analyse qui détermine si la connexion est dans l'état "obsolète" et s'il n'existe aucun autre obstacle à sa libération. Outre l'avantage de mettre fin à l'utilisation d'une passerelle d'ancrage qui n'est plus la mieux adaptée pour faire transiter les flux de données du terminal mobile, l'avantage principal de cet aspect de l'invention est de garantir la continuité de service. En effet, la connexion n'est pas libérée comme dans l'art antérieur sur un ordre de déconnexion venant du réseau, et les sessions de communication qu'elle porte ne sont donc pas interrompues abruptement. La connexion est libérée uniquement après la fin naturelle des sessions de communication qu'elle porte.

Selon une variante, la connexion est libérée même s'il reste une ou plusieurs sessions de communication en cours, à condition qu'elles ne transportent aucun flux de données utiles.

Selon un autre aspect de l'invention le procédé de gestion d'au moins une connexion est caractérisé en ce que le procédé comprend une étape de libération de la connexion, déclenchée en fonction de l'analyse et lorsqu'un délai prédéterminé d'utilisation de la connexion est atteint, le délai étant reçu dans le message de gestion.

L'avantage de cet aspect de l'invention est d'éviter de maintenir au delà d'une certaine limite temporelle une connexion, car ce serait prolonger l'utilisation d'une passerelle d'ancrage qui n'est plus la mieux adaptée pour faire transiter les flux de données du terminal mobile. Il se peut par exemple qu'il ne soit pas raisonnable d'attendre que toutes les sessions de communication portées par la connexion se terminent naturellement, soit parce que la passerelle d'ancrage a atteint sa capacité maximale, soit parce que des opérations de maintenance sont planifiées sur la passerelle d'ancrage, nécessitant un report de sa charge vers d'autres passerelles d'ancrage. A travers le message de gestion, il est possible dans des cas comme ceux-ci d'indiquer à l'avance au terminal mobile combien de temps reste à la connexion avant que, par exemple, elle ne soit coupée par le réseau ou que la passerelle d'ancrage soit mise hors service. On peut envisager que dans un cas d'urgence le délai prenne une valeur nulle, indiquant par là que la libération de la connexion doit être immédiate.

Dans une variante avantageuse, la libération d'une connexion peut survenir à la première de deux échéances:
- à expiration du délai ci-dessus,
- à expiration d'un autre délai mesuré à partir de la cessation du trafic de données utiles observé sur la connexion,
au moins un des deux délais étant transmis dans le message de gestion.

L'invention concerne aussi un procédé d'affectation d'un état à une connexion entre un terminal mobile et une passerelle d'ancrage située entre un réseau mobile et un réseau de commutation de paquets, la connexion étant apte à porter au moins une session de communication vers le réseau de commutation de paquets, mis en oeuvre par un équipement apte à gérer la connexion, caractérisé en ce qu'il comprend les étapes suivantes:
- une étape de décision d'un changement d'état de la connexion, en fonction d'au moins un critère prédéterminé,
- une étape d'émission d'un message de gestion comprenant au moins une information relative au changement d'état décidé, et un identifiant relatif à la connexion.

Selon ce procédé, un équipement du réseau apte à gérer une connexion du terminal mobile informe aussitôt que possible le terminal d'un changement concernant une connexion, suite à un changement de conditions affectant le réseau en général, et la passerelle d'ancrage utilisée jusque là par cette connexion en particulier Ceci est contraire à l'art antérieur, où le terminal mobile n'est jamais informé, en dehors d'un mécanisme de déconnexion/reconnexion. Ceci permet au terminal mobile de déclencher des actions d'établissement et/ou de libération de connexion, tout en assurant la continuité de service. Ces actions entreprises par le procédé précédent, sont rendues possibles grâce à la décision de changement d'état et grâce au message de gestion associé émis par ce procédé. Si plus d'une connexion existe sur le terminal mobile destiné à recevoir le message, l'identifiant de connexion lui permet de déterminer laquelle est concernée par le message.

La liste de critères prédéterminés pouvant être utilisés dans l'étape de décision d'un changement d'état de la connexion comprend au moins les critères suivants:
- localisation du terminal mobile,
- type de session ouverte sur la connexion,
- APN utilisé,
- état de charge de la passerelle d'ancrage,
- état de charge d'une autre passerelle d'ancrage.

Ces critères permettent de prendre une décision en fonction de toutes les conditions pouvant impacter la performance du réseau en général, et de la passerelle d'ancrage en particulier. Un changement de passerelle d'ancrage est nécessaire soit pour des raisons de mobilité du terminal mobile, soit pour d'autres raisons sans qu'il n'y ait nécessairement mobilité géographique du terminal mobile, comme par exemple lorsqu'il est souhaitable de reporter une partie du trafic sur une ou plusieurs autres passerelles d'ancrage.

Selon un aspect de l'invention le procédé d'affectation d'un état à une connexion est caractérisé en ce que le message de gestion comprend également au moins une information de délai prédéterminé d'utilisation de la connexion.

L'avantage de cet aspect de l'invention est de pouvoir indiquer au terminal mobile la limite temporelle au-delà de laquelle il ne faut pas maintenir une connexion donnée, au risque de prolonger l'utilisation d'une passerelle d'ancrage qui n'est plus la mieux adaptée pour faire transiter les flux de données du terminal mobile.

L'invention concerne aussi un dispositif de gestion d'au moins une connexion, une connexion étant établie entre un terminal mobile et une passerelle d'ancrage située entre un réseau mobile et un réseau de commutation de paquets, et étant apte à porter au moins une session de communication vers le réseau de commutation de paquets, caractérisé en ce qu'il comprend les moyens suivants:
- réception d'un message de gestion en provenance d'un équipement apte à gérer ladite au moins une connexion, ledit message comprenant une information relative à un changement d'état d'une connexion du terminal mobile, et un identifiant relatif à la connexion,
- détermination d'un besoin d'une nouvelle connexion, par analyse de ladite au moins une connexion en cours au moins à partir de l'information reçue,
- émission d'une requête d'établissement d'une nouvelle connexion entre le terminal mobile et une nouvelle passerelle d'ancrage, en fonction de l'analyse, ces moyens étant aptes à être mis en oeuvre lorsqu'il est déterminé que le besoin d'une nouvelle connexion existe.

L'invention concerne aussi un dispositif d'affectation d'un état à une connexion entre un terminal mobile et une passerelle d'ancrage située entre un réseau mobile et un réseau de commutation de paquets, la connexion étant apte à porter au moins une session de communication vers le réseau de commutation de paquets, mis en oeuvre par un équipement apte à gérer la connexion, caractérisé en ce qu'il comprend les moyens suivants:
- une étape de décision d'un changement d'état de la connexion, en fonction d'au moins un critère prédéterminé,
- une étape d'émission d'un message de gestion comprenant au moins une information relative au changement d'état décidé, et un identifiant relatif à la connexion.

L'invention concerne aussi un terminal mobile apte à établir au moins une connexion avec au moins une passerelle d'ancrage située entre un réseau mobile et un réseau de commutation de paquets, caractérisé en ce qu'il comprend un dispositif de gestion d'au moins une connexion.

L'invention concerne aussi un équipement apte à gérer au moins une connexion entre au moins un terminal mobile et au moins une passerelle d'ancrage située entre un réseau mobile et un réseau de commutation de paquets, caractérisé en ce qu'il comprend un dispositif d'affectation d'un état à une connexion.

L'invention concerne également un système de gestion d'au moins une connexion et d'affectation d'un état à une connexion, apte à établir et à gérer au moins une connexion entre un terminal mobile et une passerelle d'ancrage située entre un réseau mobile et un réseau de commutation de paquets, caractérisé en ce qu'il comprend au moins un dispositif de gestion d'au moins une connexion, et au moins un dispositif d'affectation d'un état à une connexion.

L'invention concerne aussi un programme d'ordinateur caractérisé en ce qu'il comprend des instructions pour la mise en oeuvre d'un procédé de gestion d'au moins une connexion, lorsque ce programme est exécuté par un processeur.

L'invention concerne enfin un programme d'ordinateur caractérisé en ce qu'il comprend des instructions pour la mise en oeuvre d'un procédé d'affectation d'un état à une connexion, lorsque ce programme est exécuté par un processeur.

Ces programmes, stockés sur un support lisible par ordinateur, peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

### 4. Présentation des figures

D'autre avantages et caractéristiques de l'invention apparaitront plus clairement à la lecture de la description suivante d'un mode de réalisation particulier de l'invention, donné à titre de simple exemple illustratif et non limitatif, et des dessins annexés, parmi lesquels :
- la figure 1, précédemment présentée, représente la procédure de changement d'attribution d'une passerelle d'ancrage à un terminal mobile, selon la technique antérieure, permettant de supporter une connexion entre un terminal mobile et un réseau de commutation de paquets,
- la figure 2 présente un exemple de mise en oeuvre des procédés de gestion d'au moins une connexion et d'affectation d'un état à une connexion, selon un mode particulier de réalisation de l'invention,
- la figure 3 représente un exemple particulier de mise en oeuvre du procédé de gestion d'au moins une connexion, selon l'invention,
- la figure 4 représente un exemple particulier de mise en oeuvre du procédé d'affectation d'un état à une connexion, selon l'invention,
- la figure 5 représente la structure d'un terminal mobile mettant en oeuvre le procédé de gestion d'au moins une connexion, selon l'invention,
- la figure 6 représente la structure d'un équipement apte à gérer une connexion mettant en oeuvre le procédé d'affectation d'un état à une connexion, selon l'invention.

### 5. Description détaillée d'au moins un mode de réalisation de l'invention

Dans la suite de la description, on considère un réseau selon les normes 3GPP applicables aux réseaux LTE/EPC, mais l'invention s'applique potentiellement à tout type de réseau y compris selon les normes futures, ou antérieures, telles que les normes applicables aux réseaux UMTS.

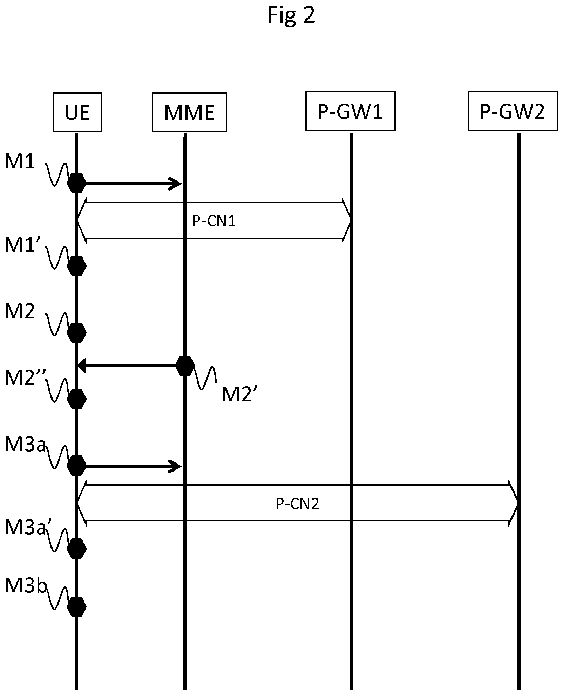

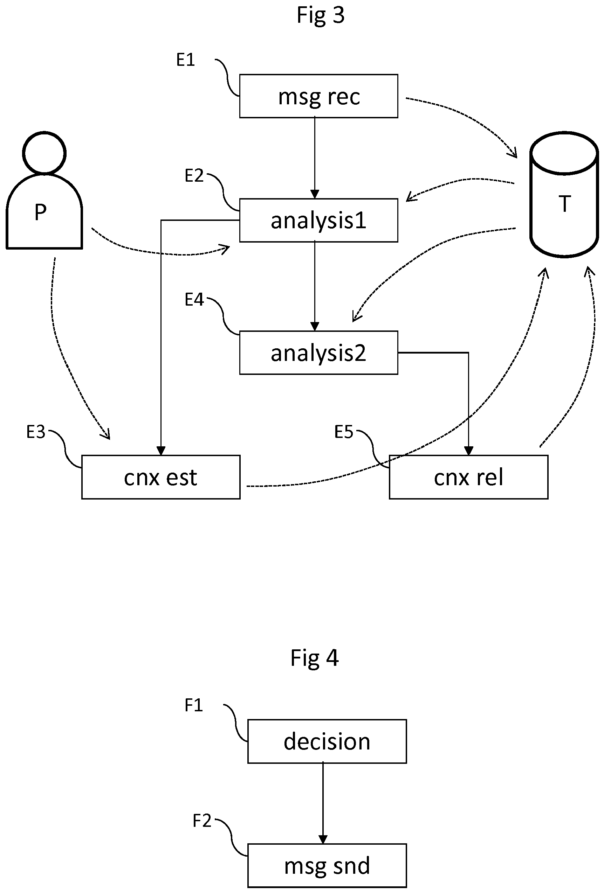

Un exemple de mise en oeuvre des procédés de gestion d'au moins une connexion et d'affectation d'un état à une connexion, selon un mode particulier de réalisation de l'invention, est maintenant présenté, en référence à la **figure 2****.** Certains éléments de la technique antérieure sont réutilisés en référence à la figure 1. Les procédés seront ensuite présentés plus en détail en référence aux figures 3 et 4.

Au moment M1 précédant une mobilité, afin d'ouvrir des sessions de communication vers un point d'accès APN du réseau de commutation de paquets PDN, un terminal mobile UE émet vers un équipement de gestion MME une demande afin d'établir une connexion P-CN1 avec une passerelle d'ancrage P-GW1, préalablement sélectionnée par l'équipement de gestion MME pour le couple { UE ; APN }. L'équipement de gestion MME ayant attribué à cette connexion P-CN1 la valeur d'état "préféré", le terminal UE met à jour une table des connexions T, à un moment M1'.

Au moment M2 consécutif à une mobilité du terminal UE, la station de base de rattachement a changé. La connexion P-CN1 ne passe plus par la station de base eNB1 mais par eNB2.

A un moment M2', l'équipement de gestion MME détecte que, pour la nouvelle localisation de l'UE, c'est-à-dire pour la station de base eNB2, la passerelle d'ancrage P-GW1 est moins adaptée qu'une autre passerelle d'ancrage P-GW2. L'équipement de gestion MME sélectionne donc P-GW2 comme nouvelle passerelle d'ancrage au couple { UE ; APN }, et envoie un message de gestion à l'UE comprenant la nouvelle valeur d'état de P-CN1, "obsolète", ainsi que l'identifiant Id-P-CN1, relatif à P-CN1. L'équipement de gestion MME n'instruit pas l'UE de libérer la connexion P-CN1, ni de demander l'établissement d'une nouvelle connexion.

A un moment M2", sur réception du message de gestion, l'UE met à jour sa table des connexions T avec les informations reçues dans le message de gestion. L'UE n'ouvre plus de nouvelle session sur P-CN1, car son état est "obsolète".

A un moment M3b, une fois que toutes les sessions en cours portées par P-CN1 se sont terminées naturellement, le terminal UE libère P-CN1, et retire P-CN1 de la table des connexions T.

Le terminal UE établit une nouvelle connexion P-CN2, qui est automatiquement faite avec P-GW2, mais seulement à partir du moment M3a où le besoin d'une nouvelle session de communication apparait, consécutivement à une action de la part de l'utilisateur sur le terminal UE, par exemple. Cette nouvelle connexion P-CN2 reçoit "préféré" comme valeur d'état, et est ajoutée à la table des connexions au moment M3a'.

Si pour une raison quelconque aucune autre connexion n'existe, même dans l'état "obsolète", il est envisageable de ne pas attendre le besoin d'une nouvelle session pour établir la nouvelle connexion P-CN2, afin d'avoir en permanence une connexion de disponible sur le terminal UE.

Dans une variante non illustrée, l'équipement de gestion MME peut aussi décider d'attribuer P-GW2 comme nouvelle passerelle au couple { UE ; APN } sans qu'il n'y ait mobilité de l'UE, par exemple si un changement de conditions du réseau provoque une surcharge de trafic sur la P-GW1. L'équipement de gestion MME envoie un message de gestion à l'UE comprenant la nouvelle valeur d'état de P-CN1, "obsolète", ainsi que l'identifiant Id-P-CN1 relatif à P-CN1, ce qui déclenche comme précédemment les mêmes actions à l'initiative de l'UE.

L'ordre temporel des moments M3a et M3b est aléatoire, et on voit donc que selon l'invention, les deux connexions P-CN1 et P-CN2 peuvent coexister, respectivement dans l'état "obsolète" et dans l'état "préféré". Ceci permet de ne pas couper abruptement des sessions de communications en cours et de garantir la continuité de service.

Un exemple particulier de mise en oeuvre du procédé de gestion d'au moins une connexion selon l'invention est maintenant décrit, en référence à la **figure 3****.** Un tel procédé peut être mis en oeuvre par un dispositif de gestion d'au moins une connexion. De façon avantageuse, ce dispositif peut-être intégré dans un terminal mobile.

L'étape E1 reçoit un message comprenant une information relative à un changement d'état d'une connexion P-CN1, l'identifiant relatif à la connexion, Id-P-CN1, ainsi que, le cas échéant, un délai d'utilisation de la connexion P-CN1. Ceci permet la mise à jour d'une table des connexions, T, qui comprend pour chaque entrée :
- un identifiant de connexion,
- son état,
- la liste des sessions qu'elle porte, et,
- le cas échéant, son délai d'utilisation.

L'étape E2 analyse la table T venant d'être mise à jour, ainsi que, le cas échéant, d'autres paramètres locaux, comme par exemple des paramètres fixés par un utilisateur P, afin de déterminer les actions à entreprendre sur les connexions.

Si la mise à jour effectuée lors de l'étape E1 concerne le passage de P-CN1 d'un état "préféré" à un état "obsolète", et si les paramètres locaux ne l'empêchent pas, les deux étapes E3 et E4 sont déclenchées en parallèle. Le passage de P-CN1 à l'état "obsolète" signifie qu'il n'y a plus de connexion dans l'état "préféré" dans la table T, puisqu'au plus une connexion peut être dans l'état "préféré" dans ce mode de réalisation.

Un paramètre local pouvant empêcher le déclenchement des étapes suivantes est par exemple une préférence fixée par l'utilisateur P pour l'utilisation permanente de la connexion P-CN1 pour porter ses sessions de communication, tant que le réseau le permet, c'est-à-dire si aucun délai d'utilisation n'est indiqué dans le message de gestion.

Si la mise à jour effectuée lors de l'étape E1 concerne le passage d'une connexion d'un état "obsolète" à un état "préféré", aucune des deux étapes E3 et E4 n'est déclenchée. Le passage de la connexion P-CN1 à l'état "préféré" signifie qu'elle est devenue la seule connexion de la table T à être dans l'état "préféré", puisqu'au plus une connexion peut être dans l'état "préféré" dans ce mode de réalisation. Une éventuelle nouvelle session de communication sera donc portée par P-CN1 sans qu'il n'y ait le besoin d'établir préalablement une nouvelle connexion.

Une telle situation peut se produire par exemple lorsque, suite à une première mobilité du terminal mobile le faisant quitter une zone desservie par une station de base, la valeur de l'état de la connexion P-CN1 est devenue "obsolète", puis, suite à une deuxième mobilité faisant retourner le terminal mobile dans la zone initiale, avant que la connexion P-CN1 n'ait été libérée, la connexion P-CN1 retrouve son état "préféré".

L'étape E3 émet, selon un mécanisme connu antérieurement, comme par exemple le mécanisme prévu par la norme 3GPP TS 23.401 v10.2.1, une requête d'établissement d'une nouvelle connexion P-CN2. Une fois la connexion P-CN2 établie, avec une passerelle d'ancrage différente de celle utilisée par P-CN1, une nouvelle entrée est ajoutée dans la table T, avec dans un premier champ l'identifiant Id-P-CN2 de P-CN2, et dans un deuxième champ son état, "préféré". Un troisième champ contenant la liste de sessions est mis à jour au fur et à mesure de l'ouverture et de la fermeture de sessions portées par P-CN2. Un quatrième champ, contenant le délai d'utilisation, est laissé vide.

Dans une variante avantageuse, l'étape E3 n'est déclenchée après l'étape E2 qu'à partir du moment où une nouvelle session de communication doit être ouverte, par exemple à l'initiative de l'utilisateur P du terminal mobile.

L'étape E4 analyse l'évolution au cours du temps de la connexion P-CN1 devenue "obsolète", par exemple en examinant dans la table T le champ contenant la liste de sessions portées par P-CN1. A partir du moment où plus aucune session n'est portée par P-CN1, l'étape E5 est déclenchée. On voit qu'entre les étapes E4 et E5, la fin naturelle de la ou des sessions est attendue, et qu'un certain laps de temps peut s'écouler.

Dans l'étape E4, si le champ de P-CN1 prévu pour un délai d'utilisation n'est pas vide, l'étape E5 est déclenchée à l'échéance de ce délai, même si P-CN1 porte encore une ou des sessions.

L'étape E5 libère la connexion P-CN1 et retire l'entrée correspondante de la table T.

Un exemple particulier de mise en oeuvre du procédé d'affectation d'un état à une connexion selon l'invention est maintenant décrit, en référence à la figure 4. Un tel procédé peut être mis en oeuvre par un dispositif d'affectation d'un état à une connexion. De façon avantageuse, ce dispositif peut-être intégré dans un équipement de gestion centralisée des connexions, tel qu'un équipement de gestion MME.

L'étape F1 détermine si l'adéquation d'une passerelle d'ancrage P-GW1 à l'utilisation qui en est faite par une connexion P-CN1 a changé. Pour ce faire, divers critères prédéterminés sont pris en compte, comme par exemple la localisation du terminal mobile UE, le type de sessions portées par P-CN1, le type de point d'accès APN au réseau de commutation de paquets PDN avec lequel les sessions sont ouvertes, l'état de charge de P-GW1 et des autres passerelles d'ancrage connues, le calendrier de maintenance des passerelles d'ancrage ou d'autres équipements du réseau.

Dans un premier cas l'étape F1 prend la décision de changer l'état d'une connexion P-CN1 de "préféré" vers "obsolète" s'il est détecté qu'il existe une passerelle d'ancrage P-GW2 mieux adaptée au couple { UE ; APN } que la passerelle d'ancrage P-GW1 associée à P-CN1.

Dans un deuxième cas l'étape F1 prend la décision de changer l'état d'une connexion P-CN1 de "obsolète" vers "préféré" s'il est détecté qu'il n'existe pas de passerelle d'ancrage P-GW2 mieux adaptée au couple { UE ; APN } que la passerelle d'ancrage P-GW1 associée à P-CN1, et si P-CN1 est préalablement dans l'état "obsolète".

Les deux cas déclenchent l'étape F2 qui émet un message comprenant le nouvel état de P-CN1 ainsi que l'identifiant Id-P-CN1 de P-CN1.

Dans le premier cas, où le nouvel état est "obsolète", le message émis par l'étape F2 peut également comprendre un délai d'utilisation de P-CN1, indiquant que la connexion P-CN1 doit être libérée à l'expiration de ce délai. Si un tel délai est inclus et qu'il est égal à zéro, cela indique que la connexion doit être libérée dès réception du message.

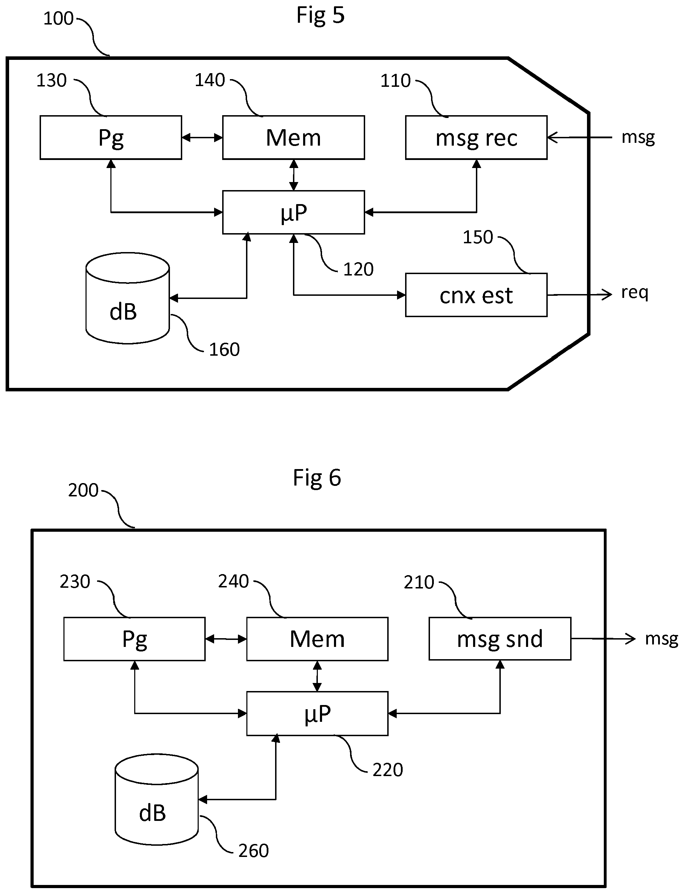

En relation avec la **figure 5****,** on présente maintenant la structure d'un terminal mobile UE, selon l'invention.

Selon un aspect de l'invention, ce terminal mobile UE comprend un dispositif 100 de gestion d'au moins une connexion. Le dispositif de gestion 100 selon l'invention comprend un module de réception 110 apte à recevoir un message de gestion en provenance d'un équipement de gestion MME. Les données d'un message sont traitées par une unité de traitement 120 équipée d'un microprocesseur apte à mettre en oeuvre les moyens constitutifs de l'invention tels que décrits précédemment, en particulier, des moyens d'analyse des connexions en cours, y compris des moyens de consultation et de mise à jour d'une table des connexions contenues dans une base de données 160, et des moyens de libération d'une connexion.

Le dispositif de gestion 100 selon l'invention comprend en outre une mémoire 140 dans laquelle est stockée un programme d'ordinateur 130 mettant en oeuvre les étapes du procédé de gestion. Le dispositif de gestion 100 selon l'invention comprend en outre un module d'émission 150 apte à émettre une requête d'établissement d'une nouvelle connexion.

A l'initialisation, les instructions de code du programme d'ordinateur 130 sont par exemple chargées dans une mémoire RAM avant d'être exécutées par le processeur de l'unité de traitement 120.

En relation avec la **figure 6****,** on présente maintenant la structure d'un équipement de gestion MME, apte gérer des connexions selon l'invention.

Selon un aspect de l'invention, cet équipement MME comprend un dispositif 200 d'affectation d'un état à une connexion. Le dispositif d'affectation 200 selon l'invention comprend un module d'émission 210 apte à émettre un message de gestion vers un terminal mobile. Les données du message sont préparées par une unité de traitement 220 équipée d'un microprocesseur apte à mettre en oeuvre les moyens constitutifs de l'invention tels que décrits précédemment, en particulier, des moyens de décision d'un changement d'état d'une connexion, y compris des moyens de consultation et de mise à jour d'une table des connexions contenues dans une base de données 260, et des moyens d'émission d'un message de gestion.

Le dispositif d'affectation 200 selon l'invention comprend en outre une mémoire 240 dans laquelle est stockée un programme d'ordinateur 230 mettant en oeuvre les étapes du procédé d'affectation.

A l'initialisation, les instructions de code du programme d'ordinateur 230 sont par exemple chargées dans une mémoire RAM avant d'être exécutées par le processeur de l'unité de traitement 220.

L'exemple de réalisation de l'invention qui vient d'être présenté n'est qu'un des modes de réalisation envisageables qui montrent que l'invention permet de garantir la continuité de service par une gestion plus fine des connexions. D'autre modes de réalisation utiliseront par exemple plus de deux valeurs d'état pour les connexions, ou permettront par exemple la coexistence sur un terminal mobile de plus d'une connexion dans l'état "préféré".

Les modes de réalisation ne se limitent pas à une application aux réseaux mobiles, et peuvent aussi s'appliquer à la gestion de connexions à un réseau de commutation de paquet à partir d'un terminal fixe.

## Revendications

1. **Procédé de gestion d'au moins une connexion,** une connexion (P-CN1) étant établie entre un terminal mobile (UE) et une passerelle d'ancrage (P-GW1) située entre un réseau mobile et un réseau de commutation de paquets (PDN), et étant apte à porter au moins une session de communication vers le réseau de commutation de paquets (PDN), **caractérisé en ce qu'**il comprend les étapes suivantes mises en oeuvre par le terminal mobile :
- réception (E1) d'un message de gestion en provenance d'un équipement de gestion (MME) apte à gérer ladite connexion (P-CN1), ledit message comprenant au moins une information relative à un changement de la connexion (P-CN1) vers un état dit "obsolète", cet état informant le terminal mobile (UE) que la passerelle d'ancrage (P-GW1) est moins adaptée qu'une autre passerelle d'ancrage (P-GW2) à des conditions impactant le réseau mobile ou une des passerelles d'ancrage (P-GW1, P-GW2), et un identifiant relatif à la connexion (P-CN1), le message de gestion ne comprenant pas d'instruction de libérer la connexion (P-CN1) ni d'instruction de demander l'établissement d'une nouvelle connexion (P-CN2),
- détermination d'un besoin d'une nouvelle connexion (P-CN2), par analyse (E2, E4) de ladite connexion (P-CN1) en cours au moins à partir de l'information reçue,
- lorsqu'il est déterminé que le besoin d'une nouvelle connexion existe, déclenchement de l'émission (E3) d'une requête d'établissement de la nouvelle connexion (P-CN2) entre le terminal mobile (UE) et l'autre passerelle d'ancrage (P-GW2), en fonction de l'analyse (E2, E4).

2. **Procédé de gestion d'au moins une connexion** selon la revendication 1, **caractérisé en ce que** l'état d'une connexion (P-CN1, P-CN2) prend une valeur d'un groupe comprenant au moins les valeurs suivantes:
- "obsolète",
- "préféré".

3. **Procédé de gestion d'au moins une connexion** selon la revendication 2, **caractérisé en ce que** l'étape (E3) d'émission d'une requête d'établissement de la nouvelle connexion (P-CN2) est déclenchée lorsqu'aucune connexion n'est dans l'état "préféré".

4. **Procédé de gestion d'au moins une connexion** selon la revendication 3, **caractérisé en ce que** l'étape d'émission (E3) d'une requête d'établissement de la nouvelle connexion (P-CN2) est déclenchée par l'obtention d'une indication selon laquelle une nouvelle session de communication est nécessaire.

5. **Procédé de gestion d'au moins une connexion** selon la revendication 3, **caractérisé en ce que** le procédé comprend une étape (E5) de libération de la connexion (P-CN1), déclenchée en fonction de l'analyse (E2, E4) et lorsque la connexion (P-CN1) ne porte plus aucune session de communication.

6. **Procédé de gestion d'au moins une connexion** selon la revendication 3, **caractérisé en ce que** le procédé comprend une étape (E5) de libération de la connexion (P-CN1), déclenchée en fonction de l'analyse (E2, E4) et lorsqu'un délai prédéterminé d'utilisation de la connexion (P-CN1) est atteint, le délai étant reçu dans le message de gestion.

7. **Procédé d'affectation d'un état à une connexion** entre un terminal mobile (UE) et une passerelle d'ancrage (P-GW1) située entre un réseau mobile et un réseau de commutation de paquets (PDN), la connexion (P-CN1) étant apte à porter au moins une session de communication vers le réseau de commutation de paquets (PDN), mis en oeuvre par un équipement (MME) apte à gérer la connexion (P-CN1), **caractérisé en ce qu'**il comprend les étapes suivantes:
- une étape de décision (F1) d'un changement de la connexion (P-CN1) vers un état dit "obsolète", lorsque l'équipement (MME) détecte que la passerelle d'ancrage (P-GW1) est moins adaptée qu'une autre passerelle d'ancrage (P-GW2) à des conditions impactant le réseau mobile ou une des passerelles d'ancrage (P-GW1, P-GW2), en fonction d'au moins un critère prédéterminé,
- une étape d'émission (F2) d'un message de gestion vers le terminal mobile (UE) comprenant au moins une information relative au changement vers l'état "obsolète", et un identifiant relatif à la connexion (P-CN1), le message ne comprenant pas d'instruction de libérer la connexion (P-CN1), ni d'instruction de demander l'établissement d'une nouvelle connexion (P-CN2).

8. **Procédé d'affectation d'un état à une connexion** selon la revendication 7, **caractérisé en ce que** le message de gestion comprend également au moins une information de délai prédéterminé d'utilisation de la connexion (P-CN1).

9. **Dispositif de gestion d'au moins une connexion,** une connexion (P-CN1) étant établie entre un terminal mobile (UE) et une passerelle d'ancrage (P-GW1) située entre un réseau mobile et un réseau de commutation de paquets (PDN), et étant apte à porter au moins une session de communication vers le réseau de commutation de paquets (PDN), **caractérisé en ce qu'**il comprend les moyens suivants:
- des moyens adaptés à la réception (E1) d'un message de gestion en provenance d'un équipement de gestion (MME) apte à gérer ladite connexion (P-CN1), ledit message comprenant une information relative à un changement de la connexion (P-CN1) vers un état dit "obsolète", cet état informant le terminal mobile (UE) que la passerelle d'ancrage (P-GW1) est moins adaptée qu'une autre passerelle d'ancrage (P-GW2) à des conditions impactant le réseau mobile ou une des passerelles d'ancrage (P-GW1, P-GW2), et un identifiant relatif à la connexion (P-CN1), le message de gestion ne comprenant pas d'instruction de libérer la connexion (P-CN1) ni d'instruction de demander l'établissement d'une nouvelle connexion (P-CN2),
- des moyens adaptés à la détermination d'un besoin d'une nouvelle connexion (P-CN2), par analyse (E2, E4) de ladite connexion (P-CN1) en cours au moins à partir de l'information reçue,
- des moyens adaptés à l' émission (E3) d'une requête d'établissement de la nouvelle connexion (P-CN2) entre le terminal mobile (UE) et l'autre passerelle d'ancrage (P-GW2), en fonction de l'analyse (E2, E4), ces moyens d'émission étant aptes à être mis en oeuvre lorsqu'il est déterminé que le besoin d'une nouvelle connexion existe.

10. **Dispositif d'affectation d'un état à une connexion** entre un terminal mobile (UE) et une passerelle d'ancrage (P-GW1) située entre un réseau mobile et un réseau de commutation de paquets (PDN), la connexion (P-CN1) étant apte à porter au moins une session de communication vers le réseau de commutation de paquets (PDN), mis en oeuvre par un équipement (MME) apte à gérer la connexion (P-CN1), **caractérise en ce qu'**il comprend les moyens suivants:
- des moyens adaptés à la décision (F1) d'un changement de la connexion (P-CN1), vers un état dit "obsolète", lorsque l'équipement (MME) détecte que la passerelle d'ancrage (P-GW1) est moins adaptée qu'une autre passerelle d'ancrage (P-GW2) à des conditions impactant le réseau mobile ou une des passerelles d'ancrage (P-GW1, P-GW2), en fonction d'au moins un critère prédéterminé,
- des moyens adaptés à l'émission (F2) d'un message de gestion vers le terminal mobile (UE) comprenant au moins une information relative au changement vers l'état "obsolète", et un identifiant relatif à la connexion (P-CN1), le message ne comprenant pas d'instruction de libérer la connexion (P-CN1), ni d'instruction de demander l'établissement d'une nouvelle connexion (P-CN2).

11. **Terminal mobile** (UE), apte à établir au moins une connexion (P-CN1, P-CN2) avec au moins une passerelle d'ancrage (P-GW1, P-GW2) située entre un réseau mobile et un réseau de commutation de paquets (PDN), **caractérisé en ce qu'**il comprend un dispositif de gestion d'au moins une connexion (P-CN1, P-CN2) selon la revendication 9.

12. **Equipement** (MME), apte à gérer au moins une connexion (P-CN1, P-CN2) entre au moins un terminal mobile (UE) et au moins une passerelle d'ancrage (P-GW1, P-GW2) située entre un réseau mobile et un réseau de commutation de paquets (PDN), **caractérisé en ce qu'**il comprend un dispositif d'affectation d'un état à une connexion selon la revendication 10.

13. **Système de gestion d'au moins une connexion et d'affectation d'un état à une connexion,** apte à établir et à gérer au moins une connexion (P-CN1, P-CN2) entre un terminal mobile (UE) et une passerelle d'ancrage (P-GW1, P-GW2) située entre un réseau mobile et un réseau de commutation de paquets (PDN), **caractérisé en ce qu'**il comprend au moins un dispositif de gestion d'au moins une connexion selon la revendication 9, et au moins un dispositif d'affectation d'un état à une connexion selon la revendication 10.

14. **Programme** d'ordinateur (130) **caractérisé en ce qu'**il comprend des instructions pour la mise en oeuvre d'un procédé de gestion d'au moins une connexion, selon la revendication 1, lorsque ce programme est exécuté par un processeur (120).

15. **Programme** d'ordinateur (230) **caractérisé en ce qu'**il comprend des instructions pour la mise en oeuvre d'un procédé d'affectation d'un état à une connexion, selon la revendication 7, lorsque ce programme est exécuté par un processeur (220).

## Patentansprüche

1. Verfahren zur Verwaltung mindestens einer Verbindung, wobei eine Verbindung (P-CN1) zwischen einem beweglichen Endgerät (UE) und einem Anker-Gateway (P-GW1) aufgebaut wird, das sich zwischen einem Mobilfunknetz und einem Paketvermittlungsnetz (PDN) befindet, und mindestens eine Kommunikationssitzung zum Paketvermittlungsnetz (PDN) tragen kann, **dadurch gekennzeichnet, dass** es die folgenden Schritte enthält, die vom beweglichen Endgerät durchgeführt werden:
- Empfang (E1) einer Verwaltungsnachricht von einer Verwaltungsausrüstung (MME), die die Verbindung (P-CN1) verwalten kann, wobei die Nachricht mindestens eine Information bezüglich einer Änderung der Verbindung (P-CN1) in einen so genannten "obsoleten" Zustand, wobei dieser Zustand das bewegliche Endgerät (UE) darüber informiert, dass das Anker-Gateway (PGW1) für Bedingungen, die sich auf das Mobilfunknetz oder eines der Anker-Gateways (P-GW1, P-GW2) auswirken, weniger geeignet ist als ein anderes Anker-Gateway (P-GW2), und eine Kennung bezüglich der Verbindung (P-CN1) enthält, wobei die Verwaltungsnachricht weder eine Anweisung, die Verbindung (P-CN1) freizugeben, noch eine Anweisung enthält, den Aufbau einer neuen Verbindung (P-CN2) anzufordern,
- Bestimmung einer Notwendigkeit einer neuen Verbindung (P-CN2) durch Analyse (E2, E4) der aktuellen Verbindung (P-CN1) mindestens ausgehend von der empfangenen Information,
- wenn bestimmt wird, dass es eine Notwendigkeit einer neuen Verbindung gibt, Auslösen des Sendens (E3) eines Antrags zum Aufbau der neuen Verbindung (P-CN2) zwischen dem beweglichen Endgerät (UE) und dem anderen Anker-Gateway (P-GW2), abhängig von der Analyse (E2, E4).

2. Verfahren zur Verwaltung mindestens einer Verbindung nach Anspruch 1, **dadurch gekennzeichnet, dass** der Zustand einer Verbindung (P-CN1, P-CN2) einen Wert einer Gruppe annimmt, die mindestens die folgenden Werte enthält:
- "obsolet",
- "bevorzugt".

3. Verfahren zur Verwaltung mindestens einer Verbindung nach Anspruch 2, **dadurch gekennzeichnet, dass** der Schritt (E3) des Sendens eines Antrags zum Aufbau der neuen Verbindung (P-CN2) ausgelöst wird, wenn keine Verbindung im Zustand "bevorzugt" ist.

4. Verfahren zur Verwaltung mindestens einer Verbindung nach Anspruch 3, **dadurch gekennzeichnet, dass** der Schritt (E3) des Sendens eines Antrags zum Aufbau der neuen Verbindung (P-CN2) durch den Erhalt einer Angabe ausgelöst wird, gemäß der eine neue Kommunikationssitzung notwendig ist.

5. Verfahren zur Verwaltung mindestens einer Verbindung nach Anspruch 3, **dadurch gekennzeichnet, dass** das Verfahren einen Schritt (E5) der Freigabe der Verbindung (P-CN1) enthält, der abhängig von der Analyse (E2, E4) und wenn die Verbindung (P-CN1) keine Kommunikationssitzung mehr trägt ausgelöst wird.

6. Verfahren zur Verwaltung mindestens einer Verbindung nach Anspruch 3, **dadurch gekennzeichnet, dass** das Verfahren einen Schritt (E5) der Freigabe der Verbindung (P-CN1) enthält, der abhängig von der Analyse (E2, E4) und wenn eine vorbestimmte Benutzungszeit der Verbindung (P-CN1) erreicht ist ausgelöst wird, wobei die Zeit in der Verwaltungsnachricht empfangen wird.

7. Verfahren zur Zuweisung eines Zustands zu einer Verbindung zwischen einem beweglichen Endgerät (UE) und einem Anker-Gateway (P-GW1), das sich zwischen einem Mobilfunknetz und einem Paketvermittlungsnetz (PDN) befindet, wobei die Verbindung (P-CN1) mindestens eine Kommunikationssitzung zum Paketvermittlungsnetz (PDN) bringen kann, durchgeführt von einer Ausrüstung (MME), die die Verbindung (P-CN1) verwalten kann, **dadurch gekennzeichnet, dass** es die folgenden Schritte enthält:
- einen Schritt der Entscheidung (F1) einer Änderung der Verbindung (P-CN1) in einen so genannten "obsoleten" Zustand, wenn die Ausrüstung (MME) erfasst, dass das Anker-Gateway (PGW1) für Bedingungen, die sich auf das Mobilfunknetz oder eines der Anker-Gateways (P-GW1, P-GW2) auswirken, weniger geeignet ist als ein anderes Anker-Gateway (P-GW2), abhängig mindestens von einem vorbestimmten Kriterium,
- einen Schritt (F2) des Sendens einer Verwaltungsnachricht an das bewegliche Endgerät (UE), die mindestens eine Information bezüglich der Änderung in den "obsoleten" Zustand und eine Kennung bezüglich der Verbindung (P-CN1) enthält, wobei die Nachricht weder eine Anweisung zur Freigabe der Verbindung (P-CN1) noch eine Anweisung zur Anforderung des Aufbaus einer neuen Verbindung (P-CN2) enthält.

8. Verfahren zur Zuweisung eines Zustands zu einer Verbindung nach Anspruch 7, **dadurch gekennzeichnet, dass** die Verwaltungsnachricht ebenfalls eine Information über eine vorbestimmte Benutzungszeit der Verbindung (P-CN1) enthält.

9. Vorrichtung zur Verwaltung mindestens einer Verbindung, wobei eine Verbindung (P-CN1) zwischen einem beweglichen Endgerät (UE) und einem Anker-Gateway (P-GW1) aufgebaut wird, das sich zwischen einem Mobilfunknetz und einem Paketvermittlungsnetz (PDN) befindet, und mindestens eine Kommunikationssitzung zu einem Paketvermittlungsnetz (PDN) tragen kann, **dadurch gekennzeichnet, dass** sie die folgenden Einrichtungen enthält:
- Einrichtungen, die für den Empfang (E1) einer Verwaltungsnachricht von einer Verwaltungsausrüstung (MME) geeignet sind, die die Verbindung (P-CN1) verwalten kann, wobei die Nachricht eine Information bezüglich einer Änderung der Verbindung (P-CN1) zu einem so genannten "obsoleten" Zustand, wobei dieser Zustand das bewegliche Endgerät (UE) darüber informiert, dass das Anker-Gateway (PGW1) für Bedingungen, die sich auf den Mobilfunknetz oder eines der Anker-Gateways (P-GW1, P-GW2) auswirken, weniger geeignet ist als ein anderes Anker-Gateway (P-GW2), und eine Kennung bezüglich der Verbindung (P-CN1) enthält, wobei die Verwaltungsnachricht weder eine Anweisung zur Freigabe der Verbindung (P-CN1) noch eine Anweisung zur Anforderung des Aufbaus einer neuen Verbindung (P-CN2) enthält,
- Einrichtungen, die zur Bestimmung einer Notwendigkeit einer neuen Verbindung (P-CN2) durch Analyse (E2, E4) der aktuellen Verbindung (P-CN1) zumindest ausgehend von der empfangenen Information geeignet sind,
- Einrichtungen, die zum Senden (E3) eines Antrags zum Aufbau der neuen Verbindung (P-CN2) zwischen dem beweglichen Endgerät (UE) und dem anderen Anker-Gateway (P-GW2) abhängig von der Analyse (E2, E4) geeignet sind, wobei diese Sendeeinrichtungen eingesetzt werden können, wenn bestimmt wird, dass die Notwendigkeit einer neuen Verbindung vorhanden ist.

10. Vorrichtung zur Zuweisung eines Zustands zu einer Verbindung zwischen einem beweglichen Endgerät (UE) und einem Anker-Gateway (P-GW1), das sich zwischen einem Mobilfunknetz und einem Paketvermittlungsnetz (PDN) befindet, wobei die Verbindung (P-CN1) mindestens eine Kommunikationssitzung zum Paketvermittlungsnetz (PDN) tragen kann, angewendet von einer Ausrüstung (MME), die die Verbindung (P-CN1) verwalten kann, **dadurch gekennzeichnet, dass** sie die folgenden Einrichtungen enthält:
- Einrichtungen, die zur Entscheidung (F1) einer Änderung der Verbindung (P-CN1) zu einem "obsolet" genannten Zustand geeignet sind, wenn die Ausrüstung (MME) erkennt, dass das Anker-Gateway (P-GW1) für Bedingungen, die sich auf das Mobilfunknetz oder eines der Anker-Gateways (P-GW1, P-GW2) auswirken, weniger geeignet ist als ein anderes Anker-Gateway (P-GW2), abhängig von mindestens einem vorbestimmten Kriterium,
- Einrichtungen, die zum Senden (F2) einer Verwaltungsnachricht an das bewegliche Endgerät (UE) geeignet sind, die mindestens eine Information bezüglich der Änderung in den Zustand "obsolet" und eine Kennung bezüglich der Verbindung (P-CN1) enthält, wobei die Nachricht weder eine Anweisung, die Verbindung (P-CN1) freizugeben, noch eine Anweisung enthält, den Aufbau einer neuen Verbindung (P-CN2) anzufordern.

11. Bewegliche Endgerät (UE), das mindestens eine Verbindung (P-CN1, P-CN2) mit mindestens einem Anker-Gateway (P-GW1, P-GW2) aufbauen kann, das sich zwischen einem Mobilfunknetz und einem Paketvermittlungsnetz (PDN) befindet, **dadurch gekennzeichnet, dass** es eine Verwaltungsvorrichtung mindestens einer Verbindung (P-CN1, P-CN2) nach Anspruch 9 enthält.

12. Ausrüstung (MME), die mindestens eine Verbindung (P-CN1, P-CN2) zwischen mindestens einem beweglichen Endgerät (UE) und mindestens einem Anker-Gateway (P-GW1, PGW2) verwalten kann, das sich zwischen einem Mobilfunknetz und einem Paketvermittlungsnetz (PDN) befindet, **dadurch gekennzeichnet, dass** sie eine Vorrichtung zur Zuweisung eines Zustands zu einer Verbindung nach Anspruch 10 enthält.

13. System zur Verwaltung mindestens einer Verbindung und zur Zuweisung eines Zustands zu einer Verbindung, das mindestens eine Verbindung (P-CN1, P-CN2) zwischen einem beweglichen Endgerät (UE) und einem Anker-Gateway (P-GW1, P-GW2) aufbauen und verwalten kann, das sich zwischen einem Mobilfunknetz und einem Paketvermittlungsnetz (PDN) befindet, **dadurch gekennzeichnet, dass** es mindestens eine Verwaltungsvorrichtung mindestens einer Verbindung nach Anspruch 9 und mindestens eine Zuweisungsvorrichtung eines Zustands zu einer Verbindung nach Anspruch 10 enthält.

14. Computerprogramm (130), **dadurch gekennzeichnet, dass** es Anweisungen zur Durchführung eines Verfahrens zur Verwaltung mindestens einer Verbindung nach Anspruch 1 enthält, wenn dieses Programm von einem Prozessor (120) ausgeführt wird.

15. Computerprogramm (230), **dadurch gekennzeichnet, dass** es Anweisungen zur Durchführung eines Verfahrens zur Zuweisung eines Zustands zu einer Verbindung nach Anspruch 7 enthält, wenn dieses Programm von einem Prozessor (220) ausgeführt wird.

## Claims

1. Method for managing at least one connection, a connection (P-CN1) being set up between a mobile terminal (UE) and an anchoring gateway (P-GW1) situated between a mobile network and a packet switching network (PDN), and being capable of bearing at least one communication session to the packet switching network (PDN), **characterized in that** it comprises the following steps implemented by the mobile terminal:
- reception (E1) of a management message from a piece of management equipment (MME) that is capable of managing said connection (P-CN1), said message comprising at least one piece of information relating to a change of the connection (P-CN1), to a state termed "obsolete", this state informing the mobile terminal (UE) that the anchoring gateway (P-GW1) is less suitable than another anchoring gateway (P-GW2) for conditions affecting the mobile network or one of the anchoring gateways (P-GW1, P-GW2), and an identifier relating to the connection (P-CN1), the management message comprising no instruction to release the connection (P-CN1) nor any instruction to request the setup of a new connection (P-CN2),
- determination of a need for a new connection (P-CN2), by analysis (E2, E4) of said connection (P-CN1) in progress at least on the basis of the received information,
- when it is determined that there is the need for a new connection, triggering of the transmission (E3) of a request for setup of the new connection (P-CN2) between the mobile terminal (UE) and the other anchoring gateway (P-GW2), as a function of the analysis (E2, E4).

2. Method for managing at least one connection according to Claim 1, **characterized in that** the state of a connection (P-CN1, P-CN2) takes a value from a group comprising at least the following values:
- "obsolete",
- "preferred".

3. Method for managing at least one connection according to Claim 2, **characterized in that** the step (E3) of transmission of a request for setup of the new connection (P-CN2) is triggered when there is no connection in the "preferred" state.

4. Method for managing at least one connection according to Claim 3, **characterized in that** the step of transmission (E3) of a request for setup of the new connection (P-CN2) is triggered by the obtainment of an indication according to which a new communication session is necessary.

5. Method for managing at least one connection according to Claim 3, **characterized in that** the method comprises a step (E5) of release of the connection (P-CN1), triggered as a function of the analysis (E2, E4) and when the connection (P-CN1) no longer bears any communication session.

6. Method for managing at least one connection according to Claim 3, **characterized in that** the method comprises a step (E5) of release of the connection (P-CN1), triggered as a function of the analysis (E2, E4) and when a predetermined time of use of the connection (P-CN1) has been reached, the time being received in the management message.

7. Method for assigning a state to a connection between a mobile terminal (UE) and an anchoring gateway (P-GW1) situated between a mobile network and a packet switching network (PDN), the connection (P-CN1) being capable of bearing at least one communication session to the packet switching network (PDN), implemented by a piece of equipment (MME) that is capable of managing the connection (P-CN1), **characterized in that** it comprises the following steps:
- a step of decision (F1) about a change of the connection (P-CN1) to a state termed "obsolete", when the equipment (MME) detects that the anchoring gateway (P-GW1) is less suitable than another anchoring gateway (P-GW2) for conditions affecting the mobile network or one of the anchoring gateways (P-GW1, P-GW2), as a function of at least one predetermined criterion,
- a step of transmission (F2) of a management message to the mobile terminal (UE) comprising at least one piece of information relating to the change to the "obsolete" state, and an identifier relating to the connection (P-CN1), the message comprising no instruction to release the connection (P-CN1), nor any instruction to request the setup of a new connection (P-CN2).

8. Method for assigning a state to a connection according to Claim 7, **characterized in that** the management message likewise comprises at least one piece of information pertaining to predetermined time of use of the connection (P-CN1).

9. Device for managing at least one connection, a connection (P-CN1) being set up between a mobile terminal (UE) and an anchoring gateway (P-GW1) situated between a mobile network and a packet switching network (PDN), and being capable of bearing at least one communication session to the packet switching network (PDN), **characterized in that** it comprises the following means:
- means suitable for the reception (E1) of a management equipment message from a piece of management equipment (MME) that is capable of managing said connection (P-CN1), said message comprising a piece of information relating to a change of the connection (P-CN1), to a state termed "obsolete", this state informing the mobile terminal (UE) that the anchoring gateway (P-GW1) is less suitable than another anchoring gateway (P-GW2) for conditions affecting the mobile network or one of the anchoring gateways (P-GW1, P-GW2), and an identifier relating to the connection (P-CN1), the management message comprising no instruction to release the connection (P-CN1) nor any instruction to request the setup of a new connection (P-CN2),
- means suitable for the determination of a need for a new connection (P-CN2), by analysis (E2, E4) of said connection (P-CN1) in progress at least on the basis of the received information,
- means suitable for the transmission (E3) of a request for setup of the new connection (P-CN2) between the mobile terminal (UE) and the other anchoring gateway (P-GW2), as a function of the analysis (E2, E4), these transmission means being capable of being implemented when it is determined that there is the need for a new connection.

10. Device for assigning a state to a connection between a mobile terminal (UE) and an anchoring gateway (P-GW1) situated between a mobile network and a packet switching network (PDN), the connection (P-CN1) being capable of bearing at least one communication session to the packet switching network (PDN), implemented by a piece of equipment (MME) that is capable of managing the connection (P-CN1), **characterized in that** it comprises the following means:
- means suitable for the decision (F1) about a change of the connection (P-CN1), to a state termed "obsolete", when the equipment (MME) detects that the anchoring gateway (P-GW1) is less suitable than another anchoring gateway (P-GW2) for conditions affecting the mobile network or one of the anchoring gateways (P-GW1, P-GW2), as a function of at least one predetermined criterion,
- means suitable for the transmission (F2) of a management message to the mobile terminal (UE) comprising at least one piece of information relating to the change to the "obsolete" state, and an identifier relating to the connection (P-CN1), the message comprising no instruction to release the connection (P-CN1), nor any instruction to request the setup of a new connection (P-CN2).

11. Mobile terminal (UE), capable of setting up at least one connection (P-CN1, P-CN2) to at least one anchoring gateway (P-GW1, P-GW2) situated between a mobile network and a packet switching network (PDN), **characterized in that** it comprises a device for managing at least one connection (P-CN1, P-CN2) according to Claim 9.

12. Piece of equipment (MME), capable of managing at least one connection (P-CN1, P-CN2) between at least one mobile terminal (UE) and at least one anchoring gateway (P-GW1, P-GW2) situated between a mobile network and a packet switching network (PDN), **characterized in that** it comprises a device for assigning a state to a connection according to Claim 10.

13. System for managing at least one connection and for assigning a state to a connection, capable of setting up and managing at least one connection (P-CN1, P-CN2) between a mobile terminal (UE) and an anchoring gateway (P-GW1, P-GW2) situated between a mobile network and a packet switching network (PDN), **characterized in that** it comprises at least one device for managing at least one connection according to Claim 9, and at least one device for assigning a state to a connection according to Claim 10.

14. Computer program (130) **characterized in that** it comprises instructions for the implementation of a method for managing at least one connection, according to Claim 1, when said program is executed by a processor (120).

15. Computer program (230) **characterized in that** it comprises instructions for the implementation of a method for assigning a state to a connection, according to Claim 7, when said program is executed by a processor (220).
